# FASCICULE DE BREVET EUROPEEN

(11) **EP 3 752 444 B1**
(45) Date de publication et mention de la délivrance du brevet: **29.12.2021**
(21) Numéro de dépôt: 19703370.7
(22) Date de dépôt: 13.02.2019
(51) Int. Cl.: B66C 1/36

(54) **DISPOSITIF D'ACCROCHAGE DE CHARGES POUR APPAREIL DE LEVAGE**
LASTTRAGENDE VORRICHTUNG FÜR EINE HUBVORRICHTUNG
LOAD-BEARING DEVICE FOR A LIFTING APPARATUS

(30) Priorité: 14.02.2018 FR 1851213
(43) Date de publication de la demande: 23.12.2020
(73) Titulaire: Lace, 36250 Saint-Maur (FR)
(72) Inventeur: AUTISSIER, Christophe, 36400 Briantes (FR); MEYNIEL, Guillaume, 36000 Châteauroux (FR); SCHMIDT, Yoann, 44350 Guerande (FR)
(74) Mandataire: Ipside
(86) Numéro de dépôt international: PCT/EP2019/053494
(87) Numéro de publication internationale: WO 2019/158555

(56) Documents cités:
- FR-A1- 2 137 404
- GB-A- 890 178
- GB-A- 2 513 646
- US-A- 3 845 978
- US-A- 4 678 219

## Description

### DOMAINE TECHNIQUE

La présente invention appartient au domaine des dispositifs de suspension de charges en vue de leur levage, elle concerne plus particulièrement un crochet de chargement (*cargo hook en* terminologie anglo-saxonne).

Plus particulièrement encore, l'invention concerne un crochet de charge pour aéronefs de type hélicoptère.

### ÉTAT DE L'ART

Dans le cadre du levage et du transport de charges, il est connu d'utiliser des dispositifs d'accrochage qui permettent, par l'intermédiaire d'élingues ou d'autres accessoires de levage, la suspension des charges à des appareils de levage tels que des grues statiques ou mobiles, des hélicoptères et similaires. De tels dispositifs sont communément appelés crochets de charge ou crochets porte-charges.

Le transport de charges externes suspendues à un hélicoptère nécessite des dispositifs d'accrochage spécifiques qui doivent présenter un compromis entre poids, résistance, encombrement et sécurité, en conformité avec les exigences du transport aérien.

Les crochets de charge comportent généralement un crochet qui peut pivoter entre une position fermée, la position support de charge, et une position ouverte dans laquelle la charge peut être libérée du crochet. Les crochets de charge sont en outre pourvus d'un cliquet qui permet un verrouillage du crochet en position fermée pendant le vol. Pour pouvoir libérer rapidement la charge, un ou plusieurs mécanismes de déverrouillage électrique peuvent être prévus qui peuvent être actionnés à partir de l'hélicoptère par l'équipage pour libérer le cliquet et permettre au crochet d'adopter la position ouverte. A titre de sécurité, une redondance des mécanismes de verrouillage est préférable et un ou plusieurs mécanismes de libération manuelle peuvent également être envisagés, lesdits mécanismes pouvant prendre la forme d'un levier de commande sur le crochet de charge lui-même et/ou sous la forme d'un système manuel de déverrouillage ou d'un système hydraulique qui peut également être utilisé à l'intérieur de l'hélicoptère.

Il existe des circonstances où les questions de sécurité aérienne exigent que la charge transportée par un hélicoptère et attachée à l'extérieur de celui-ci puisse être immédiatement libérée. Par exemple, la perte ou une baisse de régime défectueuse d'un moteur lors du transport de marchandises extérieures constituent des situations d'urgence qui nécessitent le largage immédiat d'une telle cargaison. D'un autre côté, la cargaison attachée à l'extérieur est généralement suspendue à une certaine distance au-dessous de l'hélicoptère, de sorte que l'hélicoptère et sa cargaison connectée de manière externe définissent un système pendulaire, l'hélicoptère agissant comme support fixe pour un tel système pendulaire. Les oscillations induites dans la cargaison attachée à l'extérieur peuvent entrainer des contraintes importantes dans le crochet et provoquer son ouverture intempestive.

Dans les dispositifs d'accrochage connus, le crochet est relié à un mécanisme qui permet son maintien en position fermée et son ouverture. De tels mécanismes comportent en général des cames de blocage qui actionnent un ou plusieurs leviers qui agissent sur un verrou à l'aide duquel s'ouvre ou se ferme le crochet.

Par exemple, le document GB 2513646 décrit un dispositif d'accrochage comportant un crochet dont l'ouverture et la fermeture sont assurées par un mécanisme comprenant un verrou, pourvu d'une première extrémité apte à retenir un bras supérieur du crochet, un levier coopérant avec le verrou et une came de blocage permettant d'actionner le levier.

Outre leur complexité, les solutions existantes présentent des inconvénients majeurs comme par exemple un verrou qui repose sur des roulements qui peuvent facilement être vaincus par le poids des charges soulevées causant ainsi une ouverture accidentelle du crochet, ou des rapports de réduction de couple très faibles qui ne permettent pas de réduire l'effort nécessaire à l'ouverture du crochet.

### PRÉSENTATION DE L'INVENTION

La présente invention a pour but principal de pallier les limitations de l'art antérieur et concerne un dispositif d'accrochage pour le levage et le transport de charges comportant un crochet, un boîtier dans lequel le crochet est monté pivotant, et un mécanisme de verrouillage déverrouillage placé à l'intérieur du boîtier et permettant de bloquer le crochet dans une position fermée et de libérer ledit crochet dans une position ouverte, le mécanisme de verrouillage déverrouillage comportant un verrou pivotant pourvu d'une cavité inférieure conformée pour recevoir une extrémité supérieure du crochet, un levier coopérant avec le verrou et une came de blocage permettant d'actionner le levier.

Ce dispositif d'accrochage est remarquable en ce que le levier est monté pivotant dans le boîtier et comporte un premier galet à une première extrémité et un deuxième galet à une deuxième extrémité opposée à la première extrémité, en ce que le verrou comporte une cavité supérieure dans laquelle peut reposer et rouler le premier galet, en ce que la came de blocage est pourvue d'au moins un bras de blocage sur lequel peut reposer et rouler le deuxième galet, et en ce que une rotation de la came de blocage dans un sens produit un basculement du levier dans l'autre sens, libérant le premier galet du verrou, et un pivotement du verrou sous l'effet du crochet jusqu'à la libération de l'extrémité dudit crochet de la cavité inférieure dudit verrou.

Plus particulièrement, le crochet est monté pivotant autour d'un axe de pivotement du crochet et comporte un bras supérieur, se terminant par l'extrémité supérieure, et un bras inférieur, lesdits bras déterminant une gorge apte à recevoir un connecteur d'un accessoire de levage.

Avantageusement, un cliquet de sécurité est monté pivotant autour d'un axe de pivotement du cliquet entre une position ouverte permettant l'engagement du connecteur de l'accessoire de levage dans la gorge du crochet et une position fermée obturant une ouverture de ladite gorge.

Selon un mode de réalisation, la position fermée du cliquet présente un état déverrouillé permettant le passage du cliquet à la position ouverte par une pression du connecteur de l'accessoire de levage, et un état verrouillé dans lequel le cliquet est immobilisé.

De façon avantageuse, le verrou est monté pivotant dans le boîtier autour d'un axe de pivotement du verrou, et dans lequel la cavité inférieure présente une surface d'appui sur laquelle repose l'extrémité supérieure du crochet en position fermée et la cavité supérieure présente une surface concave arrondie qui épouse une forme du premier galet.

Selon un mode de réalisation, le levier est monté pivotant dans le boîtier autour d'un axe de pivotement du levier et comporte un évidement entre ledit axe de pivotement du levier et le deuxième galet.

De ce fait, la rotation de la came de blocage pour l'ouverture du crochet produit l'insertion du bras de blocage dans l'évidement du levier.

Avantageusement, le basculement du levier est réalisé par l'action du bras de blocage sur le deuxième galet lorsque la came de blocage est mise en rotation et par l'action de la cavité supérieure du verrou sur le premier galet sous l'effet du poids du crochet.

Selon un mode de réalisation, la rotation de la came de blocage est actionnée et contrôlée par au moins une commande électrique ou hydraulique.

Les concepts fondamentaux de l'invention venant d'être exposés ci-dessus dans leur forme la plus élémentaire, d'autres détails et caractéristiques ressortiront plus clairement à la lecture de la description qui suit et en regard des dessins annexés, donnant à titre d'exemple non limitatif un mode de réalisation d'un dispositif d'accrochage conforme aux principes de l'invention.

### BRÈVE DESCRIPTION DES FIGURES

Les différentes figures ainsi que les éléments d'une même figure ne sont pas nécessairement représentés à la même échelle. Sur l'ensemble des figures, les éléments identiques portent le même repère.

Il est ainsi illustré en :
Figures 1a et 1b : des vues en perspectives du dispositif d'accrochage selon l'invention ;
Figure 2 : une vue en perspective du mécanisme de verrouillage déverrouillage couplé au crochet selon l'invention ;
Figure 3 : une vue de face du crochet du dispositif d'accrochage selon l'invention ;
Figure 4 : une vue de face du verrou du mécanisme de verrouillage déverrouillage de la figure 2 ;
Figure 5 : une vue de face du levier du mécanisme de verrouillage déverrouillage de la figure 2 ;
Figure 6 : une vue de face de la came de blocage du mécanisme de verrouillage déverrouillage de la figure 2 ;
Figure 7 : une vue plane du mécanisme de verrouillage déverrouillage et du crochet de la figure 2 ;
Figure 8 : une vue plane schématique et partielle du dispositif d'accrochage laissant apparaitre le mécanisme de verrouillage déverrouillage et le crochet en position ouverte ;
Figure 9 : une vue en perspective de la came de blocage couplé à ses moyens d'activation selon l'invention ;
Figure 10 : une vue en perspective selon un premier côté de la came de blocage de la figure 9 ;
Figure 11 : une vue en perspective selon un deuxième côté de la came de blocage de la figure 9 ;
Figures 12a et 12b : des vue planes de la came de blocage dans une position verrouillée (12a) et dans une position déverrouillée (12b) ;
Figures 13a et 13b : des schématisations des figures 12a et 12b respectivement ;
Figures 14a et 14b : des vues planes de la came de blocage coopérant avec un dispositif indicateur selon l'invention.

### DESCRIPTION DÉTAILLÉE DE MODES DE RÉALISATION

Dans le mode préféré de réalisation décrit ci après, on fait référence à un dispositif d'accrochage destiné principalement au transport de charges par hélicoptère. Cet exemple n'est nullement exclusif d'applications au levage et transport de charges par d'autres appareils.

Un tel dispositif d'accrochage est usuellement lié à un hélicoptère qui comporte à cette fin des moyens de fixation comme par exemple une chape, un palier ou des perçages. Le dispositif d'accrochage permet alors la suspension de la charge devant être transportée, et ce par l'intermédiaire d'un accessoire de levage. Il est entendu par accessoire de levage tout composant ou équipement non lié à l'hélicoptère, permettant la préhension de la charge, qui est placé soit entre le dispositif d'accrochage de l'hélicoptère et la charge, soit sur la charge elle-même ; sont par exemple considérés comme accessoires de levage les élingues, le matériel d'élingage, les éléments amortisseurs, les cordes, les filets, les bennes, les plates-formes, les équipements de levage de véhicules ; ces accessoires de levage peuvent également être dotés de crochets secondaires, de connecteurs tels que des anneaux ou des manilles, et de compensateurs de torsion.

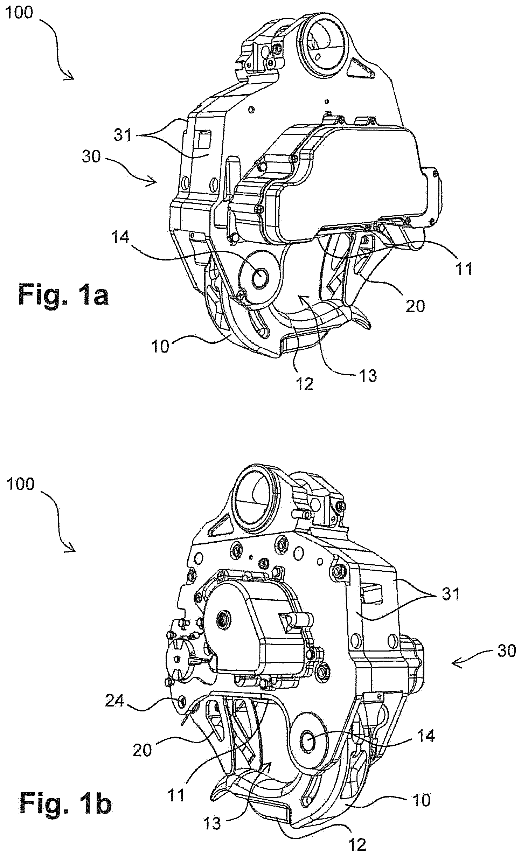

Les figures 1a et 1b représentent en vues perspectives un dispositif d'accrochage 100 comportant principalement un crochet 10, un cliquet 20 de sécurité, un boîtier 30 par rapport auquel sont articulés le crochet et le cliquet de sécurité, et dans lequel est placé un mécanisme de verrouillage déverrouillage du crochet qui sera décrit dans la suite et qui constitue une partie fondamentale de la présente invention.

Selon l'exemple illustré, le crochet 10 présente une forme incurvée en U et comporte un bras supérieur 11 et un bras inférieur 12, le bras de charge, lesdits bras déterminant une gorge 13 dans laquelle vient s'engager un connecteur d'un accessoire de levage non représenté, tel qu'un anneau ou une manille.

Le crochet 10 est monté pivotant par rapport au boîtier 30 autour d'un axe de pivotement du crochet 14 agencé au niveau d'une portion joignant les deux bras dudit crochet.

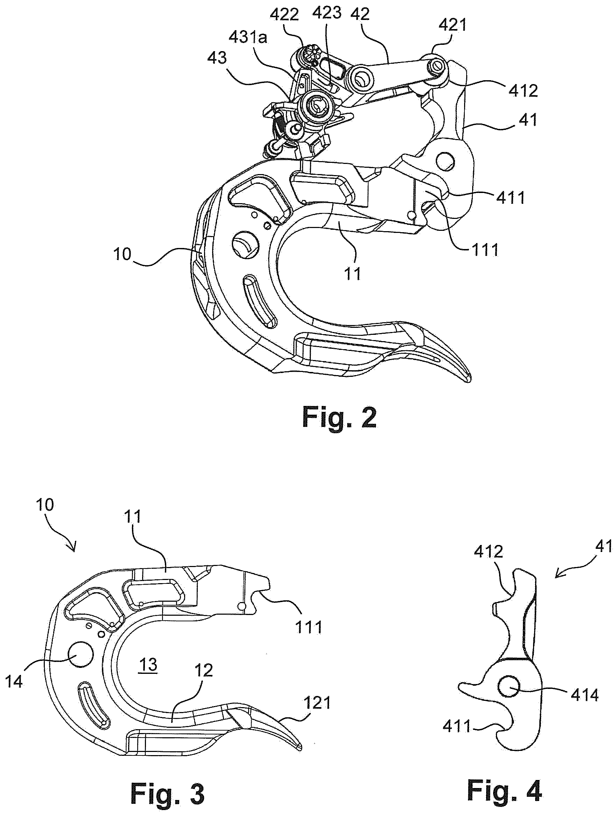

La figure 3 représente le crochet 10 isolé du reste du dispositif d'accrochage.

Selon l'exemple illustré, le cliquet 20 de sécurité comporte deux portions planes en vis-à-vis, de forme générale triangulaire, définissant un volume creux du cliquet, dans lequel volume peut venir se loger une partie du bras de charge 12 du crochet 10 avec un jeu latéral minimum.

Le cliquet 20 de sécurité est monté pivotant par rapport au boîtier 30 autour d'un axe de pivotement du cliquet 24.

Les axes de pivotement du crochet 10 et du cliquet 20 sont maintenus fixes par rapport au boîtier 30.

Selon l'exemple illustré, le boîtier 30 comporte deux flasques 31 espacés et reliés entre eux par des moyens de fixation tels que des boulons et des entretoises.

Le crochet 10 pivote autour de l'axe de pivotement du crochet 14 entre une position fermée, de support de charge, et une position ouverte, de libération de charge. Dans la position fermée, le cliquet 20 de sécurité obture le côté ouvert de la gorge 13 du crochet 10 entre l'extrémité du bras supérieur 11 et l'extrémité du bras de charge 12. La position ouverte quant à elle correspond à un dégagement du côté ouvert de la gorge 13. Ce dégagement est obtenu par un basculement du crochet 10 vers le bas du dispositif d'accrochage, le côté ouvert de la gorge 13 étant alors écarté du cliquet 20 de sécurité qui reste sensiblement à la même position dans les deux configurations, fermée et ouverte, du dispositif d'accrochage.

En outre, le cliquet 20 de sécurité pivote autour de l'axe de pivotement du cliquet 24 entre une position ouverte et une position fermée qui peut être déverrouillée ou verrouillée, le cliquet étant constamment rappelé angulairement par un ressort de torsion non représenté. Le fonctionnement du cliquet de sécurité est assuré par des moyens et des composants qui ne sont pas décrits dans la présente demande, qui s'intéresse plus particulièrement au mécanisme de verrouillage déverrouillage du crochet 10.

Selon l'exemple illustré, le mécanisme de verrouillage déverrouillage est placé entre les flasques 31, à l'intérieur du boîtier 30, et comporte un verrou 41, un levier 42 et une came 43 de blocage.

La figure 2 représente en vue perspective les différents éléments du mécanisme de verrouillage déverrouillage du crochet 10, les flasques des figures 1a et 1b étant retirés pour laisser transparaitre l'agencement des éléments dudit mécanisme.

Le verrou 41, représenté sur la figure 4, présente une forme allongée et comporte une cavité inférieure 411 et une cavité supérieure 412. Le verrou 41 est monté pivotant dans le boîtier 30 autour d'un axe de pivotement du verrou 414. Les deux cavités du verrou 41 sont ménagées aux deux extrémités dudit verrou.

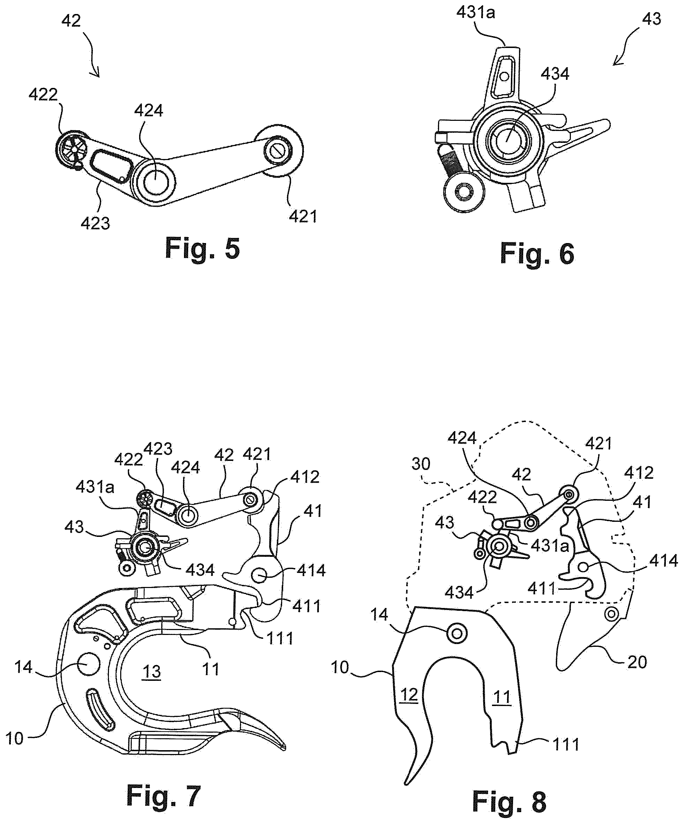

Le levier 42, représenté sur la figure 5, comporte un premier galet 421 à une première extrémité et un deuxième galet 422 à une deuxième extrémité opposée à ladite première extrémité. Le levier 42 est monté pivotant dans le boîtier 30 autour d'un axe de pivotement du levier 424. Chaque galet du levier 42 est apte à tourner autour d'un axe propre dudit galet, son axe de révolution par exemple lorsque celui-ci est circulaire.

La came 43 de blocage, représentée sur la figure 6, est montée pivotante dans le boîtier 30 autour d'un axe de pivotement central 434, et comporte au moins un bras de blocage 431a.

Le mécanisme de verrouillage déverrouillage, comprenant le verrou 41, le levier 42 et la came 43, ainsi que le crochet 10 en position fermée sont représentés de façon isolée en vue plane sur la figure 7 et en vue perspective sur la figure 2.

Le crochet 10 est maintenu en position fermée à l'aide de son bras supérieur 11 qui comporte un pêne 111 à son extrémité libre, ledit pêne étant conformé pour venir se loger dans la cavité inférieure 411 du verrou 41 et reposer sur une surface d'appui de ladite cavité inférieure. Dans la même configuration fermée, la cavité supérieure 412 du verrou 41 supporte le premier galet 421 du levier 42, ladite cavité supérieure présentant une surface d'appui adaptée à la réception du premier galet 421 et au roulement de celui-ci. À l'autre extrémité du levier 42, opposée à l'extrémité comportant le premier galet, le deuxième galet 422 repose en équilibre stable sur le bras de blocage 431a de la came 43 de blocage. En position fermée, l'équilibre stable des différents éléments est maintenu par le verrouillage de la came 43 de blocage qui est alors immobilisée en rotation autour de son axe de pivotement central 434.

La position ouverte du crochet 10 est obtenue quant à elle par le déverrouillage et la mise en rotation de la came 43 de blocage, le mécanisme de verrouillage déverrouillage assurant une transmission du mouvement jusqu'au crochet 10 et produisant le basculement vers le bas de celui-ci.

La cinématique d'ouverture du crochet 10 à partir de la rotation de la came 43 de blocage correspond, en se référant aux figures 7 et 8, à une rotation dans le sens horaire de la came de blocage qui permet au bras de blocage 431a d'entrainer le roulement du deuxième galet 422 du levier 42 jusqu'à effacement dudit bras de blocage dans un évidement 423 dudit levier adjacent au deuxième galet. L'introduction du bras de blocage 431a dans l'évidement 423 libère alors la rotation du levier 42 autour de l'axe de pivotement du levier 424, ledit levier bascule alors dans le sens antihoraire en provoquant le roulement du premier galet 421 dans la cavité supérieure 412 du verrou 41. Le roulement du premier galet 421, dirigé vers le haut, se poursuit jusqu'à la libération dudit premier galet de la cavité supérieure 412 du verrou 41, le roulement est également entretenu par le moment appliqué sur le verrou par l'action du crochet 10 qui tend à faire pivoter le verrou dans le sens antihoraire. Lorsque le levier 42 bascule complètement jusqu'à une butée déterminée, il libère complètement la rotation du verrou 41 qui bascule alors sous l'effet du poids du crochet, et de la charge supportée par celui-ci le cas échéant, jusqu'à libérer le pêne 111 du crochet 10 de la cavité inférieure 411 dudit verrou, à la manière d'un système à gâchette. Le crochet 10 est alors libre de basculer vers le bas par gravité et/ou par élasticité.

La figure 8 représente le mécanisme de verrouillage déverrouillage et le crochet en position ouverte.

De façon avantageuse, les galets du levier 42 permettent une transmission progressive du mouvement et des efforts, et limitent ainsi, grâce au roulement, tout mouvement de glissement brusque d'un composant qui pourrait provoquer un choc d'énergie suffisante pour détériorer le composant en question et/ou ses liaisons mécaniques.

Selon un mode de réalisation, le levier 42 peut être lesté au niveau de son deuxième galet ou équipé d'un ressort afin de faciliter son pivotement lorsque la came 43 de blocage est mise en rotation.

Selon un mode de réalisation, chaque axe de rotation propre d'un galet du levier 42 est fixé à l'aide de moyens de fixation adaptés tels que des goupilles et des écrous.

Selon un mode de réalisation, la rotation de la came 43 de blocage est actionnée et contrôlée par des commandes électriques et/ou hydrauliques.

En résumé, la fermeture et l'ouverture du crochet 10 sont contrôlées par la came 43 de blocage, et opérées par l'intermédiaire du levier 42, le verrou 41 et le bras de charge 11 présentant un état d'équilibre dans lequel ledit bras de charge supporte une charge et est verrouillé, et un état de déséquilibre dans lequel le bras de charge libère la charge et est déverrouillé.

Le dispositif d'accrochage ainsi décrit peut supporter une charge de 5 kilogrammes à 10 tonnes sans risque d'ouverture intempestive en cas de vol.

Le mécanisme de verrouillage déverrouillage couplé au crochet agit comme un réducteur de couple et présente une cinématique avantageuse qui permet au dispositif d'accrochage de supporter des charges variant de cinq kilogrammes à dix tonnes avec une came de blocage de dimensions réduites pouvant être activée par des efforts réduits, et ce en limitant au maximum le risque d'ouverture intempestive du crochet pendant le vol de l'hélicoptère.

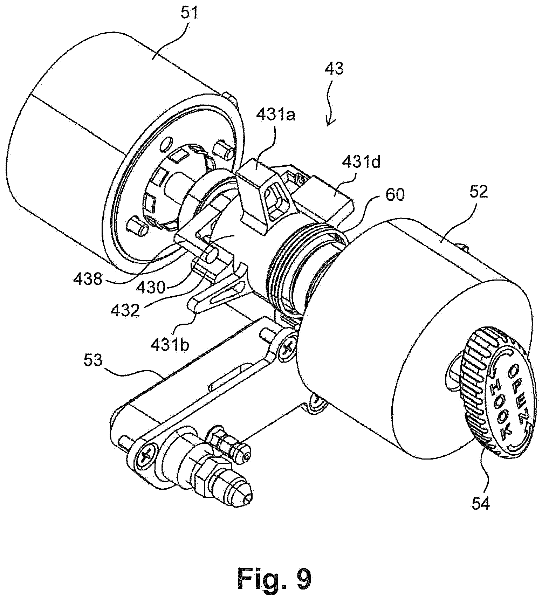

Selon la présente invention, la came de blocage 43 est actionnée par quatre moyens indépendants pour un largage plus sûr des charges transportées. Les moyens d'actionnement de la came de blocage sont illustrés sur la figure 9 qui représente la came de blocage 43 couplée à :
- un premier solénoïde 51 de commande électrique ;
- un second solénoïde 52 de commande électrique ;
- un système de commande hydraulique 53 ;
- un levier de déverrouillage mécanique 54.

Le premier solénoïde 51 actionne la came de blocage 43 lors d'un largage normal et peut également actionner ladite came pour des largages d'urgence, ou de secours, l'ordre de largage provenant du poste de pilotage.

Le second solénoïde 51 est quant à lui réservé aux largages d'urgence uniquement et est commandé depuis la cabine par l'équipage de bord.

La présence de deux solénoïdes de commande électrique de la came de blocage 43 permet en effet de dissocier la commande du largage normal, assurée par le premier solénoïde 51, de la commande du largage d'urgence, assurée au moins par les deux solénoïdes 51 et 52.

Le système de commande hydraulique 53 permet d'actionner la came de blocage 43 pour un largage d'urgence, et peut être activé depuis la cabine par l'intermédiaire d'une poignée de secours non représentée.

Le levier de déverrouillage mécanique 54 permet à un équipage au sol de déverrouiller la came de blocage 43 pour ouvrir le crochet 10 du dispositif d'accrochage en vue d'un chargement ou d'un déchargement de celui-ci.

Hormis le levier de déverrouillage mécanique 54, qui ne peut être manipulé que par un opérateur au sol, les solénoïdes 51 et 52 de commande électrique du largage normal et/ou d'urgence ainsi que le système de commande hydraulique 53 du largage d'urgence permettent à l'équipage de bord de disposer d'une importante redondance dans les commandes de largage, qui améliore la sécurité des opérations de transport de charges par hélicoptère.

Par exemple, les deux solénoïdes 51 et 52 de commande électrique peuvent être activés simultanément pour plus de fiabilité dans des situations critiques telles qu'un largage de précision, et pour plus de puissance chaque solénoïde peut être activé par un circuit électrique indépendant.

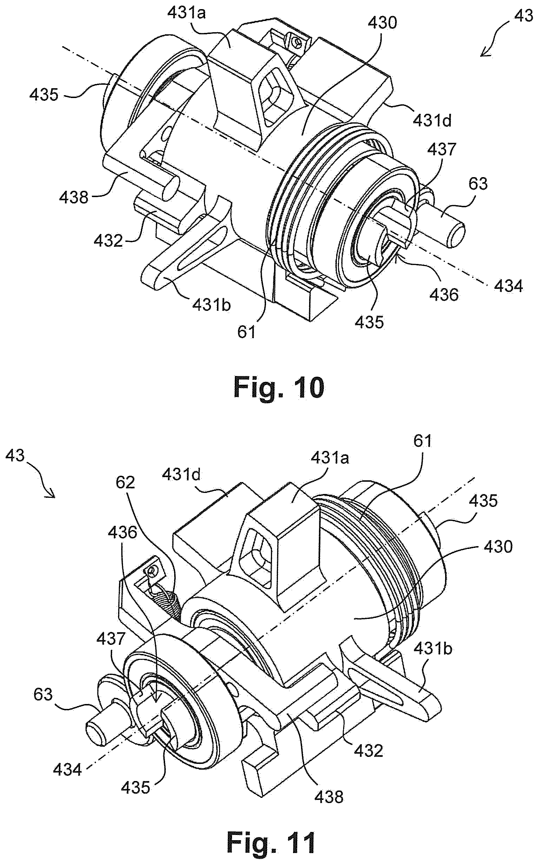

La came de blocage 43, selon l'exemple de réalisation illustré sur les figures 10 et 11, comporte principalement un moyeu central 430 et un arbre creux 435 cylindrique traversant le moyeu central et le dépassant par ses deux extrémités. L'arbre creux 435 est couplé par chacune de ses extrémités à un solénoïde comme représenté sur la figure 9. Chaque solénoïde induit une rotation de l'arbre 435 qui entraine à son tour le moyeu central 430 créant ainsi le mouvement de pivotement de la came de blocage 43 qui est décrit plus en détail dans la suite.

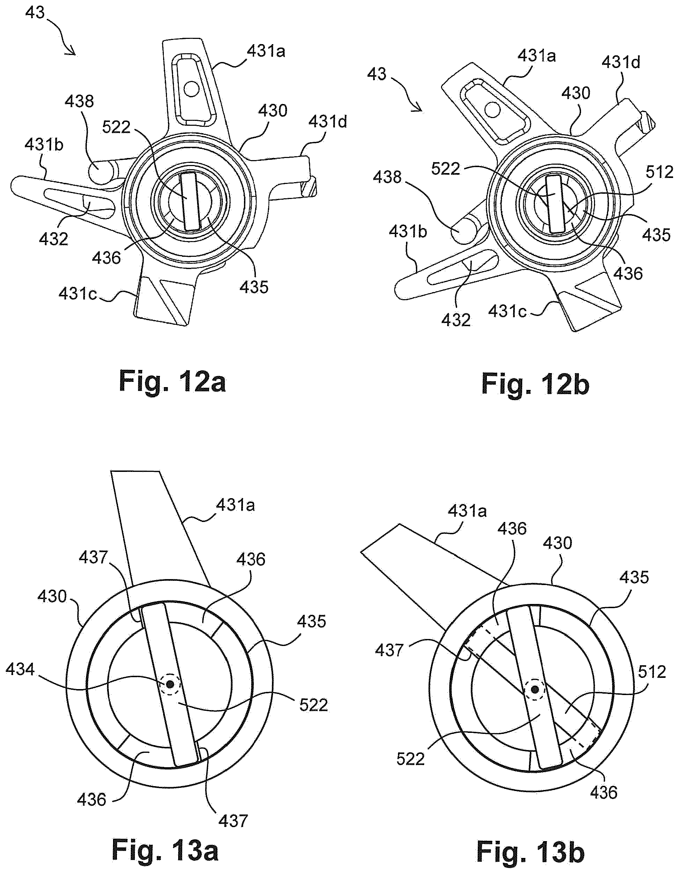

Le moyeu central 430, selon l'exemple de réalisation illustré, présente un corps cylindrique de section droite circulaire, duquel corps s'étendent radialement des bras 431a, 431b, 431c et 431d dans une configuration telle que représentée sur les figures 12a et 12b, le bras de blocage 431a, initialement introduit, coopérant avec le levier 42 du mécanisme de verrouillage déverrouillage précédemment décrit.

Les autres bras présentent des formes adaptées à la réalisation de fonctions secondaires qui ne sont pas entièrement exposées.

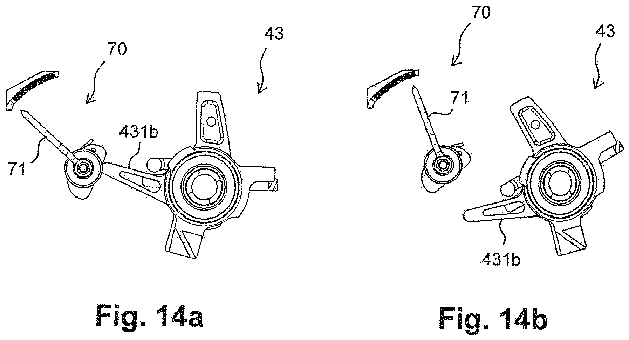

Par exemple, le bras 431b peut être relié à un dispositif indicateur 70 tel que représenté sur les figures 14a et 14b comprenant une aiguille 71 qui indique visuellement le statut de verrouillage de la came de blocage, statut directement lié à la position de celle-ci, au travers d'une fenêtre ménagée dans un carter protégeant ladite came de blocage.

Le moyeu central 430, selon l'exemple illustré, comporte en outre une partie saillante 432 sur laquelle vient s'appuyer une pièce de transmission 438 solidaire de l'arbre creux 435. La partie saillante 432 permet donc à l'arbre 435 d'entrainer en rotation, dans le sens de l'appui de ladite pièce de transmission sur ladite partie saillante, le moyeu central 430.

Dans l'exemple de réalisation illustré, la pièce de transmission 438 présente une forme globale en U avec une base perpendiculaire à l'arbre 435 et des branches parallèles audit arbre et déportées par rapport à celui-ci.

L'arbre creux 435, selon l'exemple de réalisation illustré, comporte à chacune de ses extrémités deux entailles 436 diamétralement opposées s'étendant longitudinalement sur une longueur déterminée. Les entailles 436 d'une extrémité de l'arbre creux 435 sont situées en vis-à-vis des entailles 436 de l'extrémité opposée. Chaque entaille 436 définit deux parois radiales 437 sur l'arbre creux 435.

Chaque extrémité de l'arbre creux 435 est couplée à un axe d'un solénoïde par l'intermédiaire d'un barreau traversant transversalement ledit axe de part en part et butant contre les parois radiales 437 des entailles 436 de ladite extrémité.

Les figures 12a et 12b représentent le premier barreau 512 du premier solénoïde et le deuxième barreau 522 du deuxième solénoïde insérés transversalement dans les entailles 436 de l'arbre creux 435. Chaque barreau présente une longueur au moins égale au diamètre extérieur de l'arbre 435 et est placé diamétralement entre les deux entailles 436 de l'extrémité de l'arbre à laquelle il est couplé. Les parois radiales 437 d'une même entaille 436 présentent un écartement permettant au barreau placé dans ladite entaille un débattement déterminé.

Un exemple de fonctionnement de la came de blocage est schématisé sur les figures 13a et 13b.

La figure 13a représente l'état initial de la came de blocage, le deuxième barreau 522 et le premier barreau 512, caché par ledit deuxième barreau, sont chacun au contact d'une première paroi radiale 437 d'une première entaille 436 et d'une seconde paroi radiale 437 de l'entaille diamétralement opposée, les deux entailles 437 étant sensiblement parallèles.

Lorsque le premier solénoïde de commande électrique est activé, le premier barreau 512 s'anime d'un mouvement de rotation autour de l'axe de la came 434 dans le sens antihoraire, selon les figures 13a et 13b, sous l'effet de la force électromotrice induite par le champ magnétique dudit premier solénoïde. Le premier barreau exerce alors un couple sur l'arbre 435 au niveau des parois radiales 437 de contact produisant la rotation dudit arbre et du moyeu 430 qui reprend par sa partie saillante 432 le mouvement de la pièce de transmission 438 solidaire de l'arbre 435 tel que représenté sur les figures 12a et 12b.

Selon l'invention, les deux solénoïdes 51 et 52 sont découplés et peuvent être activés séparément ou simultanément. Les exemples des figures 12a à 13b illustrent une activation du premier solénoïde seul, le deuxième barreau 522 reste donc dans sa position initiale, la rotation de l'arbre 435 sous l'effet du premier barreau 512 n'affectant pas le deuxième barreau 52 en raison de l'écartement entre les parois radiales 437 des entailles 436.

Avantageusement, cette redondance permet à l'équipage de disposer de deux moyens d'activation indépendants, divisant par deux la probabilité de défaillance totale de l'activation.

De plus, le couple nécessaire pour mettre en rotation la came peut également être divisé par deux en activant simultanément les deux solénoïdes.

Dans l'exemple de réalisation illustré sur la figure 11, la pièce de transmission 432 est reliée à une tige 63, solidaire du boîtier du dispositif d'accrochage non représenté sur cette figure, par un ressort de traction 62 qui amortit le mouvement de ladite pièce de transmission et donc de l'arbre 435, et rappelle ledit arbre à sa position initiale lorsque cesse l'action des solénoïdes.

Le moyeu central 430 est quant à lui rappelé à sa position initiale, qui correspond à la position de verrouillage de la came de blocage 43, par l'intermédiaire d'un ressort de torsion 61 reliant ledit moyeu central à la tige 63 solidaire du boîtier du dispositif d'accrochage.

## Revendications

1. Dispositif d'accrochage (100) pour le levage et le transport de charges comportant un crochet (10), un boîtier (30) dans lequel le crochet est monté pivotant, et un mécanisme de verrouillage déverrouillage (41, 42, 43) placé à l'intérieur du boîtier et permettant de bloquer le crochet dans une position fermée et de libérer ledit crochet dans une position ouverte, le mécanisme de verrouillage déverrouillage comportant un verrou (41) pivotant pourvu d'une cavité inférieure (411) conformée pour recevoir une extrémité supérieure (111) du crochet, un levier (42) coopérant avec le verrou et une came (43) de blocage permettant d'actionner le levier, **caractérisé en ce que** le levier est monté pivotant dans le boîtier et comporte un premier galet (421) à une première extrémité et un deuxième galet (422) à une deuxième extrémité opposée à la première extrémité, **en ce que** le verrou comporte une cavité supérieure (412) dans laquelle peut reposer et rouler le premier galet, **en ce que** la came de blocage est pourvue d'au moins un bras de blocage (431a) sur lequel peut reposer et rouler le deuxième galet, et **en ce que** une rotation de la came de blocage dans un sens produit un basculement du levier dans l'autre sens, libérant le premier galet du verrou, et un pivotement du verrou sous l'effet du crochet jusqu'à la libération de l'extrémité dudit crochet de la cavité inférieure dudit verrou.

2. Dispositif d'accrochage selon la revendication 1, dans lequel le crochet (10) est monté pivotant autour d'un axe de pivotement du crochet (14) et comporte un bras supérieur (11), se terminant par l'extrémité supérieure (111), et un bras inférieur (12), lesdits bras déterminant une gorge (13) apte à recevoir un connecteur d'un accessoire de levage.

3. Dispositif d'accrochage selon la revendication 2, dans lequel un cliquet (20) de sécurité est monté pivotant autour d'un axe de pivotement du cliquet (24) entre une position ouverte permettant l'engagement du connecteur de l'accessoire de levage dans la gorge (13) du crochet (10) et une position fermée obturant une ouverture de ladite gorge.

4. Dispositif d'accrochage selon la revendication 3, dans lequel la position fermée du cliquet (20) présente un état déverrouillé permettant le passage du cliquet à la position ouverte par une pression du connecteur de l'accessoire de levage, et un état verrouillé dans lequel le cliquet est immobilisé.

5. Dispositif d'accrochage selon l'une quelconque des revendications précédentes, dans lequel le verrou (41) est monté pivotant dans le boîtier (30) autour d'un axe de pivotement du verrou (414), et dans lequel la cavité inférieure (411) présente une surface d'appui sur laquelle repose l'extrémité supérieure (111) du crochet en position fermée et la cavité supérieure (412) présente une surface concave arrondie qui épouse une forme du premier galet (421).

6. Dispositif d'accrochage selon l'une quelconque des revendications précédentes, dans lequel le levier (42) est monté pivotant dans le boîtier (30) autour d'un axe de pivotement du levier (424) et comporte un évidement (423) entre ledit axe de pivotement du levier et le deuxième galet (422).

7. Dispositif d'accrochage selon la revendication 6, dans lequel la rotation de la came (43) de blocage pour l'ouverture du crochet (10) produit l'insertion du bras de blocage (431a) dans l'évidement (423) du levier (42).

8. Dispositif d'accrochage selon l'une quelconque des revendications précédentes, dans lequel le basculement du levier (42) est réalisé par l'action du bras de blocage (431a) sur le deuxième galet (422) lorsque la came (43) de blocage est mise en rotation et par l'action de la cavité supérieure (412) du verrou (41) sur le premier galet (421) sous l'effet du poids du crochet (10).

9. Dispositif d'accrochage selon l'une quelconque des revendications précédentes, dans lequel la rotation de la came (43) de blocage est actionnée et contrôlée par au moins une commande électrique.

10. Dispositif d'accrochage selon l'une quelconque des revendications précédentes, dans lequel la rotation de la came (43) de blocage est actionnée et contrôlée par au moins une commande hydraulique.

## Patentansprüche

1. Einhakvorrichtung (100) zum Heben und Transportieren von Lasten, umfassend einen Haken (10), ein Gehäuse (30), in dem der Haken schwenkbar montiert ist, und einen Mechanismus zur Verriegelung und Entriegelung (41, 42, 43), der im Inneren des Gehäuses angeordnet ist und es ermöglicht, den Haken in einer geschlossenen Position zu blockieren und den Haken in einer geöffneten Position freizugeben, wobei der Mechanismus zur Verriegelung und Entriegelung einen schwenkbaren Riegel (41) umfasst, der mit einer unteren Vertiefung (411) versehen ist, die geformt ist, um ein oberes Ende (111) des Hakens aufzunehmen, einen mit dem Riegel zusammenwirkenden Hebel (42) und ein Sperrnocken (43), der es ermöglicht, den Hebel zu betätigen, **dadurch gekennzeichnet, dass** der Hebel schwenkbar im Gehäuse montiert ist und eine erste Walze (421) an einem ersten Ende und eine zweite Walze (422) an einem zweiten Ende gegenüber dem ersten Ende umfasst, dass der Riegel eine obere Vertiefung (412) umfasst, in der die erste Walze aufliegen und rollen kann, dass der Sperrnocken mit mindestens einem Sperrarm (431a) versehen ist, auf dem die zweite Walze aufliegen und rollen kann, und dass ein Drehung des Sperrnockens in eine Richtung ein Umschwenken des Hebels in die andere Richtung bewirkt, wodurch die erste Walze aus dem Riegel gelöst wird, und ein Schwenken des Riegels unter der Wirkung des Hakens, bis das Ende des Hakens aus der unteren Vertiefung des Riegels freigegeben wird.

2. Einhakvorrichtung nach Anspruch 1, wobei der Haken (10) schwenkbar um eine Schwenkachse des Hakens (14) montiert ist und einen oberen Arm (11) umfasst, der mit dem oberen Ende (111) endend, und einem unteren Arm (12), wobei die Arme eine Öffnung (13) bestimmen, die geeignet ist, einen Verbinder eines Hebezubehörs aufzunehmen.

3. Einhakvorrichtung nach Anspruch 2, wobei eine Sicherheitsklinke (20) schwenkbar um eine Schwenkachse der Klinke (24) montiert ist, zwischen einer geöffneten Position, die das Eingreifen des Verbinders des Hebezubehörs in die Öffnung (13) des Hakens (10) ermöglicht, und einer geschlossenen Position, die ein Öffnen der Öffnung verschließt.

4. Einhakvorrichtung nach Anspruch 3, wobei die geschlossene Position der Klinke (20) über einen entriegelten Zustand verfügt, der die Umstellung der Klinke in die geöffnete Position durch Druck vom Verbinder des Hebezubehörs ermöglicht, und einen verriegelten Zustand, in dem die Klinke unbeweglich ist.

5. Einhakvorrichtung nach einem der vorhergehenden Ansprüche, wobei der Riegel (41) schwenkbar im Gehäuse (30) um eine Schwenkachse des Riegels (414) montiert ist und wobei die untere Vertiefung (411) über eine Auflagefläche verfügt, auf der das obere Ende (111) des Hakens aufliegt in geschlossener Position und die obere Vertiefung (412) über eine abgerundete konkave Oberfläche verfügt, die einer Form der ersten Walze (421) entspricht.

6. Einhakvorrichtung nach einem der vorhergehenden Ansprüche, wobei der Hebel (42) schwenkbar im Gehäuse (30) um eine Schwenkachse des Hebels (424) montiert ist und eine Aussparung (423) zwischen der Schwenkachse des Hebels und der zweiten Walze (422) umfasst.

7. Einhakvorrichtung nach Anspruch 6, wobei die Drehung des Sperrnockens (43) zum Öffnen des Hakens (10) das Einführen des Sperrarms (431a) in die Aussparung (423) des Hebels (42) bewirkt.

8. Einhakvorrichtung nach einem der vorhergehenden Ansprüche, wobei das Umschwenken des Hebels (42) durch die Wirkung des Sperrarms (431a) auf die zweite Walze (422) erreicht wird, wenn der Sperrnocken (43) gedreht wird, und durch die Wirkung der oberen Vertiefung (412) des Riegels (41) auf die erste Walze (421), unter der Wirkung des Gewichts des Hakens (10).

9. Einhakvorrichtung nach einem der vorhergehenden Ansprüche, wobei die Drehung des Sperrnockens (43) durch mindestens eine elektrische Steuerung betätigt und gesteuert wird.

10. Einhakvorrichtung nach einem der vorhergehenden Ansprüche, wobei die Drehung des Sperrnockens (43) durch mindestens eine hydraulische Steuerung betätigt und gesteuert wird.

## Claims

1. Bearing device (100) for lifting and transporting loads including a hook (10), a housing (30) wherein the hook is pivotally mounted, and a latch and release mechanism (41, 42, 43) placed inside the housing and for locking the hook in a closed position and for releasing said hook in an open position, the latch and release mechanism including a pivot latch (41) provided with a lower cavity (411) shaped to receive an upper end (111) of the hook, a lever (42) cooperating with the latch and a locking cam (43) for actuating the lever, **characterised in that** the lever is pivotally mounted in the housing and includes a first roller (421) at a first end and a second roller (422) at a second end opposite the first end, **in that** the latch includes an upper cavity (412) wherein the first roller may rest and roll, **in that** the locking cam is provided with at least one locking arm (431a) whereon the second roller may rest and roll, and **in that** a rotation of the locking cam in one direction produces a tilting of the lever in the other direction, releasing the first roller from the latch, and a pivoting of the latch under the effect of the hook until the end of said hook is released from the lower cavity of said latch.

2. Bearing device according to claim 1, wherein the hook (10) is pivotally mounted about a pivot axis of the hook (14) and includes an upper arm (11), ending by the upper end (111), and a lower arm (12), said arms determining a groove (13) capable of receiving a connector of a lifting accessory.

3. Bearing device according to claim 2, wherein a safety pawl (20) is pivotally mounted about a pivot axis of the pawl (24) between an open position for engaging the connector of the lifting accessory in the groove (13) of the hook (10) and a closed position sealing an opening of said groove.

4. Bearing device according to claim 3, wherein the closed position of the pawl (20) has an unlocked state for the passage of the pawl to the open position by a pressure of the connector of the lifting accessory, and a locked state wherein the pawl is immobilised.

5. Bearing device according to any one of the preceding claims, wherein the latch (41) is pivotally mounted in the housing (30) about a pivot axis of the latch (414), and wherein the lower cavity (411) has a bearing surface whereon the upper end (111) of the hook rests in closed position and the upper cavity (412) has a rounded concave surface that conforms to a shape of the first roller (421) .

6. Bearing device according to any one of the preceding claims, wherein the lever (42) is pivotally mounted in the housing (30) about a pivot axis of the lever (424) and includes a recess (423) between said pivot axis of the lever and the second roller (422).

7. Bearing device according to claim 6, wherein the rotation of the locking cam (43) for opening the hook (10) produces the insertion of the locking arm (431a) into the recess (423) of the lever (42).

8. Bearing device according to any one of the preceding claims, wherein the tilting of the lever (42) is achieved by the action of the locking arm (431a) on the second roller (422) when the locking cam (43) is rotated and by the action of the upper cavity (412) of the latch (41) on the first roller (421) under the effect of the weight of the hook (10).

9. Bearing device according to any one of the preceding claims, wherein the rotation of the locking cam (43) is actuated and controlled by at least one electrical control.

10. Bearing device according to any one of the preceding claims, wherein the rotation of the locking cam (43) is actuated and controlled by at least one hydraulic control.
